# DEMANDE DE BREVET EUROPEEN

(11) **EP 0 599 685 A1**
(43) Date de publication de la demande: **01.06.1994**
(21) Numéro de dépôt: 93402737.6
(22) Date de dépôt: 08.11.1993
(51) Int. Cl.: B23C 3/34, B26F 1/00, B23D 45/12

(54) **Dispositif pour usiner des fentes au travers d'un tube**

(30) Priorité: 26.11.1992 FR 9214264
(71) Demandeur: MCNEIL AKRON REPIQUET, F-93350 Le Bourget (FR)
(72) Inventeur: Basset, Jean-Marie, F-68210 Dannemarie (FR); Ecoffey, Hubert, F-90100 Delle (FR)
(74) Mandataire: Plaçais, Jean-Yves

(57) **Abrégé**

L'invention concerne un dispositif pour usiner des fentes au travers d'une paroi d'un tube.

Le dispositif comprend une cage (30) portée par un bâti (18) et comportant un passage (32) pour le déplacement en translation d'un tube (10) dans une direction axiale (XX); des moyens de blocage (110) pour immobiliser la cage par rapport au tube dans une position mutuelle d'usinage; des moyens d'avance pas à pas propres à imposer des déplacements relatifs entre la cage et le tube et les amener dans des positions mutuelles d'usinage successives; et au moins un ensemble d'usinage (44) porté par la cage et comportant une multiplicité de bras pivotants (46) portant chacun un train de fraises d'usinage (52) et déplaçables chacun par pivotement entre une position de repos et une position de travail dans lesquelles le train de fraises est respectivement éloigné de la paroi du tube ou en contact d'usinage avec la paroi du tube.

Application notamment à la réalisation de tubes extrudés en matière plastique utilisables pour l'extraction de gaz ou pour le forage.

## Description

L'invention concerne un dispositif pour usiner des fentes au travers de la paroi d'un tube, en particulier d'un tube extrudé en matière plastique de type polyoléfinique, comme le polyéthylène, le polychlorure de vinyle, etc.

Il existe des applications industrielles qui nécessitent l'utilisation de tubes dont la paroi est munie, sur une partie au moins de la longueur du tube, de fentes réalisées transversalement par rapport à l'axe du tube. Ces fentes sont destinées à permettre à un milieu liquide ou gazeux, soit de s'échapper du tube, soit d'y pénétrer au travers des fentes.

Parmi ces applications industrielles connues, on peut citer par exemple les tubes d'extraction de gaz utilisés dans les décharges, les tubes de forage implantés verticalement, etc.

Dans toutes ces applications industrielles, il est nécessaire de pratiquer une multiplicité de fentes qui doivent répondre à des caractéristiques bien précises pour permettre le passage d'un fluide dans des conditions optimales, sans pour cela affaiblir la résistance mécanique du tube qui est soumis à des conditions de service très sévères.

Il existe déjà des dispositifs qui permettent d'usiner des fentes au travers de la paroi d'un tube, mais ces dispositifs ont des performances limitées.

C'est ainsi qu'ils ne permettent d'usiner simultanément qu'un nombre réduit de fentes, généralement pas plus de quatre fentes à la fois, et qu'ils n'offrent pratiquement pas de possibilités de réglage.

Ainsi, ces dispositifs connus ne permettent pas de réaliser des fentes décalées dans la direction axiale du tube.

Par ailleurs, ces dispositifs connus ont des cadences d'usinage faibles et ne conviennent qu'à la réalisation de fentes sur des tubes déjà fabriqués.

Ils ne peuvent donc en aucun cas être utilisés directement sur une ligne d'extrusion de tubes en matière plastique.

En conséquence, ces dispositifs connus ne peuvent être utilisés que dans des installations hors ligne et réaliser les fentes sur des tubes préalablement stockés, ce qui pose des problèmes de stockage.

L'invention a notamment pour but de surmonter les inconvénients précités.

C'est en particulier un but de l'invention de procurer un dispositif du type précité qui permet d'usiner simultanément et rapidement un grand nombre de fentes de caractéristiques bien définies.

C'est aussi un but de l'invention de procurer un tel dispositif qui permet de régler à volonté les caractéristiques des fentes et qui permet notamment de réaliser des fentes décalées dans la direction axiale du tube.

C'est encore un but de l'invention de procurer un tel dispositif qui peut être inséré directement dans une ligne d'extrusion de tubes, notamment en matière plastique, ou encore hors ligne d'extrusion avec une installation de stockage et d'introduction de tubes coupés à une longueur déterminée.

C'est aussi un but de l'invention de procurer un tel dispositif qui peut être utilisé avec des tubes dont les diamètres et les épaisseurs de paroi peuvent varier sur des gammes étendues.

L'invention propose en conséquence un dispositif pour usiner des fentes transversales au travers d'une paroi d'un tube, qui comprend :
- une cage portée par un bâti et comportant un passage autorisant un déplacement en translation du tube dans une direction axiale déterminée,
- des moyens de blocage de la cage, propres à immobiliser la cage par rapport au tube dans une position mutuelle d'usinage,
- des moyens d'avance pas à pas propres à imposer des déplacements relatifs entre la cage et le tube et les amener dans des positions mutuelles d'usinage successives, et
- au moins un ensemble d'usinage porté par la cage et comportant une multiplicité de bras pivotants possédant chacun une première extrémité montée à pivotement sur la cage autour d'un axe s'étendant parallèlement à la direction axiale et une seconde extrémité portant un train de fraises d'usinage entraîné en rotation par un moteur, ainsi que des moyens de commande des bras pour faire pivoter chaque bras entre une position de repos dans laquelle le train de fraises est éloigné de la paroi du tube et une position de travail dans laquelle le train de fraises est en contact d'usinage avec la paroi du tube.

Le dispositif de l'invention permet ainsi de réaliser une succession de déplacements relatifs entre la cage et le tube pour parvenir à chaque fois à une position d'usinage dans laquelle la cage est immobilisée sur le tube dans cette position d'usinage définie.

Dans la position ainsi obtenue, les bras pivotants du ou de chaque ensemble d'usinage sont actionnés par les moyens de commande pour usiner simultanément une multiplicité de fentes au moyen des trains de fraises respectifs des bras.

Lorsque l'usinage est terminé, les bras pivotants sont déplacés pour permettre le retrait des trains de fraises, la cage est désolidarisée du tube et les moyens d'avance sont actionnés pour autoriser un déplacement relatif de la cage et du tube qui correspond à un pas, ce qui permet d'arriver à une nouvelle position d'usinage, et ainsi de suite.

Dans une forme de réalisation préférée de l'invention, la cage est montée mobile en translation sur le bâti dans la direction axiale de déplacement du tube. Dans cette forme de réalisation, les moyens d'avance pas à pas comprennent un équipage mobile monté en translation sur le bâti, dans la même direction axiale, et muni de moyens de blocage pour immobiliser cet équipage par rapport au tube, ainsi que des vérins de commande pour changer la position mutuelle de la cage et de l'équipage mobile lorsque les moyens de blocage de la cage ou les moyens de blocage de l'équipage mobile sont actionnés.

On comprendra que le dispositif peut ainsi être utilisé, soit sur une ligne d'extrusion, dans laquelle le tube venu d'extrusion avance en continu, soit hors ligne d'extrusion dans laquelle le tube est déplacé par les moyens d'avance pas à pas du dispositif.

Dans le premier cas, l'équipage mobile est immobilisé par rapport au tube et les vérins de commande précités sont actionnés pour déplacer la cage en translation en sens opposé au déplacement du tube. La cage est alors immobilisée sur le tube tandis que l'équipage mobile est désolidarisé du tube. La cage peut ainsi suivre le déplacement du tube sur une course limitée et usiner simultanément les fentes, et ainsi de suite. Autrement dit, la cage est immobilisée sur le tube pendant que celui-ci avance en continu sur une course correspondant à la longueur d'un pas.

Dans le deuxième cas, la cage est immobilisée par rapport au bâti et ce sont les moyens d'avance qui permettent de faire avancer pas à pas le tube qui provient d'une réserve de stockage.

Dans une forme de réalisation préférée de l'invention, les moyens de blocage de la cage ainsi que les moyens de blocage de l'équipage mobile comprennent chacun deux paires de mâchoires opposées propres à enserrer des régions diamétralement opposées de la paroi du tube, sous l'action d'organes d'actionnement.

Selon une autre caractéristique de l'invention, le dispositif comprend des moyens de blocage de la cage par rapport au bâti, ce qui permet d'utiliser le dispositif pour usiner des tubes hors ligne d'extrusion.

Le dispositif de l'invention peut comporter, soit un seul ensemble d'usinage, soit encore deux ensembles d'usinage.

Dans l'un ou l'autre cas, le ou chaque ensemble d'usinage comporte avantageusement quatre bras pivotants disposés deux à deux dans des régions diamétralement opposées de la cage par rapport à la direction axiale de déplacement du tube.

On procure ainsi quatre bras dont les axes de pivotement sont en principe disposés à 90° les uns par rapport aux autres par rapport à l'axe de déplacement qui coïncide avec l'axe du tube.

Dans une forme de réalisation préférée de l'invention, chaque bras pivotant porte un moteur dont l'arbre s'étend coaxialement à l'axe de pivotement du bras et porte une poulie sur laquelle s'enroule une courroie d'entraînement du train de fraises d'usinage.

Ceci permet de diminuer l'inertie du bras et de simplifier la transmission du mouvement entre le moteur et le train de fraises.

De façon avantageuse, le moteur est un moteur asynchrone à vitesse variable, alimenté par un variateur de fréquence.

Selon une autre caractéristique de l'invention, le ou chaque ensemble d'usinage comprend une couronne de manoeuvre propre à être entraînée en rotation coaxialement par rapport à la direction de déplacement du tube, sur un débattement angulaire limité, par rapport à l'ensemble d'usinage, chacun des bras étant relié par une bielle articulée à la couronne d'entraînement, ce qui permet un pivotement synchronisé des bras lorsque la couronne d'entraînement est entraînée en rotation dans un sens ou dans l'autre.

Selon une autre caractéristique de l'invention, l'un au moins des bras pivotants d'un ensemble d'usinage peut être désaccouplé de la couronne de manoeuvre.

Ainsi, dans le cas particulier où chaque ensemble d'usinage comporte quatre bras pivotants opposés deux à deux, on peut prévoir par exemple que deux des bras soient désaccouplés, ce qui permet, soit d'usiner quatre fentes ou séries de fentes simultanément, soit deux fentes ou séries de fentes simultanément.

Selon une autre caractéristique de l'invention, le dispositif comprend des moyens pour régler la position de l'un au moins des bras pivotants sur l'ensemble d'usinage.

Ainsi, dans l'exemple où l'ensemble d'usinage comprend quatre bras dont les axes de pivotement sont disposés chacun à 90° les uns par rapport aux autres, on peut prévoir des moyens pour modifier la position de l'axe de pivotement de deux bras.

Selon une autre caractéristique de l'invention, le train de fraises de chaque bras comprend une pluralité de disques de fraisage montés amovibles sur un axe commun, en sorte que le nombre, l'écartement mutuel et les dimensions des disques peuvent être modifiés à volonté.

Dans la description qui suit, faite à titre d'exemple, on se réfère aux dessins annexés, sur lesquels :
- la figure 1 est une vue en coupe longitudinale d'un tronçon de tube muni de fentes transversales;
- la figure 2 est une vue en coupe transversale du tronçon de tube de la figure 1;
- la figure 3 est une vue latérale d'un dispositif selon l'invention;
- la figure 4 est une vue de côté du dispositif de la figure 3;
- la figure 5 est une vue détaillée correspondant à la figure 4 et montrant plus particulièrement la structure d'un ensemble d'usinage;
- la figure 6 est une vue en coupe d'un bras pivotant et de son moteur d'entraînement;
- la figure 7 est une vue détaillée d'une partie de la figure 3;
- la figure 8 est une vue en élévation d'une partie de l'équipage mobile du dispositif des figures 2 à 7; et
- la figure 9 est une vue en élévation d'une autre partie de l'équipage mobile.

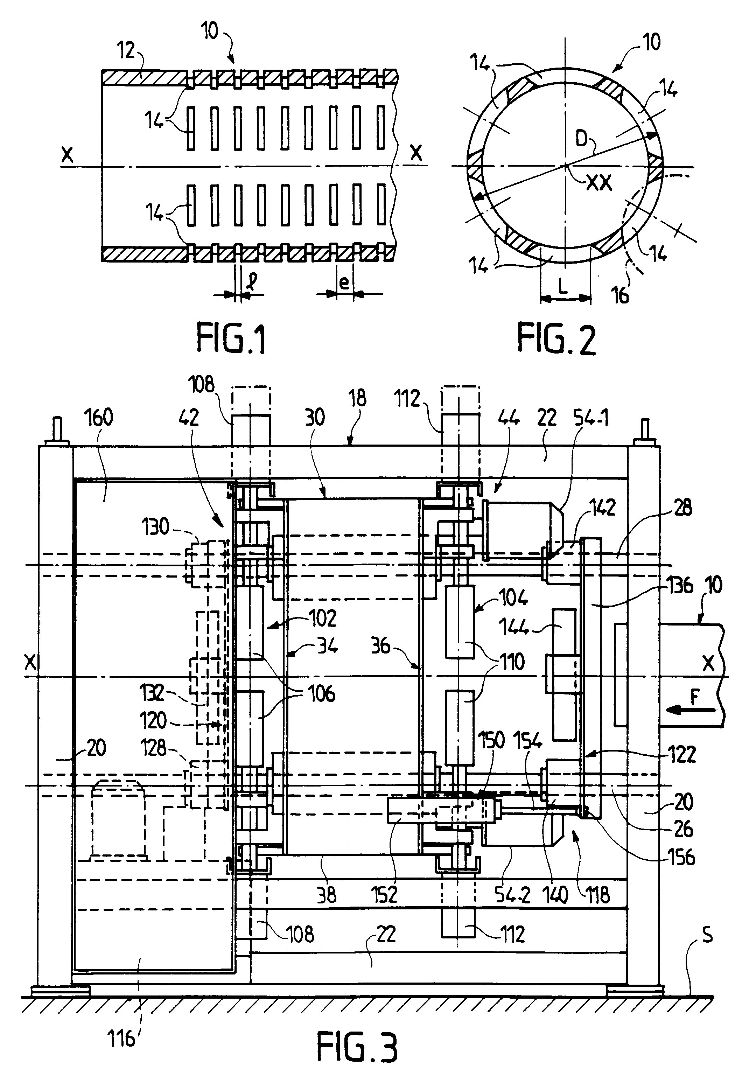

On se réfère tout d'abord aux figures 1 et 2 qui représentent un tronçon de tube 10 comportant une paroi cylindrique 12 de révolution autour d'un axe XX, formé par exemple en matière plastique extrudée. La paroi 12 est munie d'une multiplicité de fentes 14 qui s'étendent transversalement à la direction axiale XX. Dans l'exemple, la paroi comporte des séries successives de six fentes 14, chaque série de fentes étant dans un même plan, si bien que toutes les fentes sont alignées. Les fentes 14 s'étendent sur une largeur 1 (figure 1) et une longueur L (figure 2) et sont espacées axialement de manière à ménager une épaisseur de matière e (figure 1). Le tube 10 a un diamètre extérieur D et chacune des fentes 14 est réalisée par un disque d'usinage 16 (représenté en traits interrompus sur la figure 2) déplacé progressivement en direction de l'axe du tube. La profondeur de pénétration du tube est choisie de telle manière que la fente obtenue s'étende sur la longueur L définie précédemment.

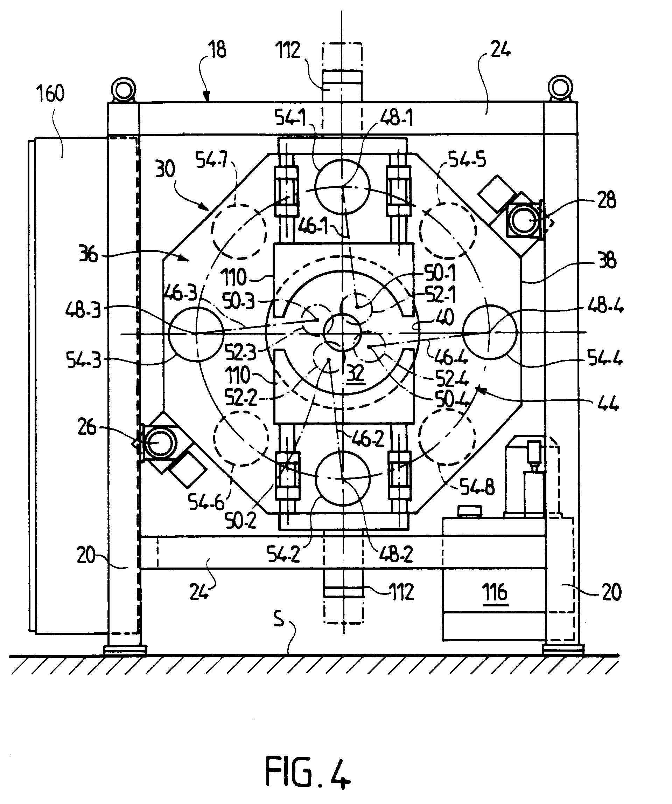

On se réfère maintenant aux figures 3 et 4 pour décrire un dispositif d'usinage comprenant un bâti 18 formé de quatre montants verticaux 20 prenant appui sur le sol et reliés entre eux par des longerons 22 et par des traverses 24. Deux des montants 20 portent une barre de guidage 26 s'étendant horizontalement et parallèlement aux longerons 22, tandis que les deux autres montants 20 portent une autre barre de guidage 28 qui s'étend parallèlement à la barre 26 mais qui est située à une hauteur supérieure par rapport au sol S.

Le dispositif est destiné à usiner un tube 10 (figure 3) qui se déplace suivant une direction horizontale XX qui s'étend parallèlement aux barres de guidage 26 et 28 et qui coïncide avec l'axe XX du tube 10. Ce dernier se déplace dans le sens de la flèche F, c'est-à-dire de la droite vers la gauche sur la figure 3.

Le dispositif comprend une cage 30 montée mobile en translation le long des barres de guidage 26 et 28 du bâti 18, c'est-à-dire dans la direction axiale XX de déplacement du tube 10. La cage 30 comprend un passage 32 (figure 4) autorisant le déplacement en translation du tube 10 au travers d'elle.

La cage 30 comprend deux joues opposées 34 et 36 s'étendant verticalement et maintenues espacées l'une de l'autre par des entretoises 38 (figure 3).

Comme on peut le voir sur la figure 4, la joue 36 est limitée par un bord extérieur octogonal 38 et par un bord intérieur circulaire 40 qui définit le passage 32. La joue 34 possède la même forme que la joue 36.

Les joues 34 et 36 portent respectivement deux ensembles d'usinage 42 et 44 qui permettent chacun l'usinage de quatre séries de fentes.

On décrira maintenant la structure de l'ensemble d'usinage 44 en référence particulière aux figures 4 à 6, remarque étant faite que l'ensemble d'usinage 42 possède une structure générale analogue à celle de l'ensemble d'usinage 44.

Ce dernier comprend quatre bras pivotants 46, à savoir deux bras pivotants 46-1 et 46-2 disposés dans des régions diamétralement opposées de la cage, dans le sens vertical, et deux autres bras 46-3 et 46-4 disposés dans des régions diamétralement opposées de la cage, dans le sens horizontal. Chacun des bras 46-1 à 46-4 possède une première extrémité 48-1 à 48-4 montée à pivotement sur la joue 36 autour d'un axe parallèle à l'axe XX. Dans l'exemple, les quatre extrémités 48-1 à 48-4 sont disposées à 90° les unes des autres par rapport à l'axe XX (figure 4).

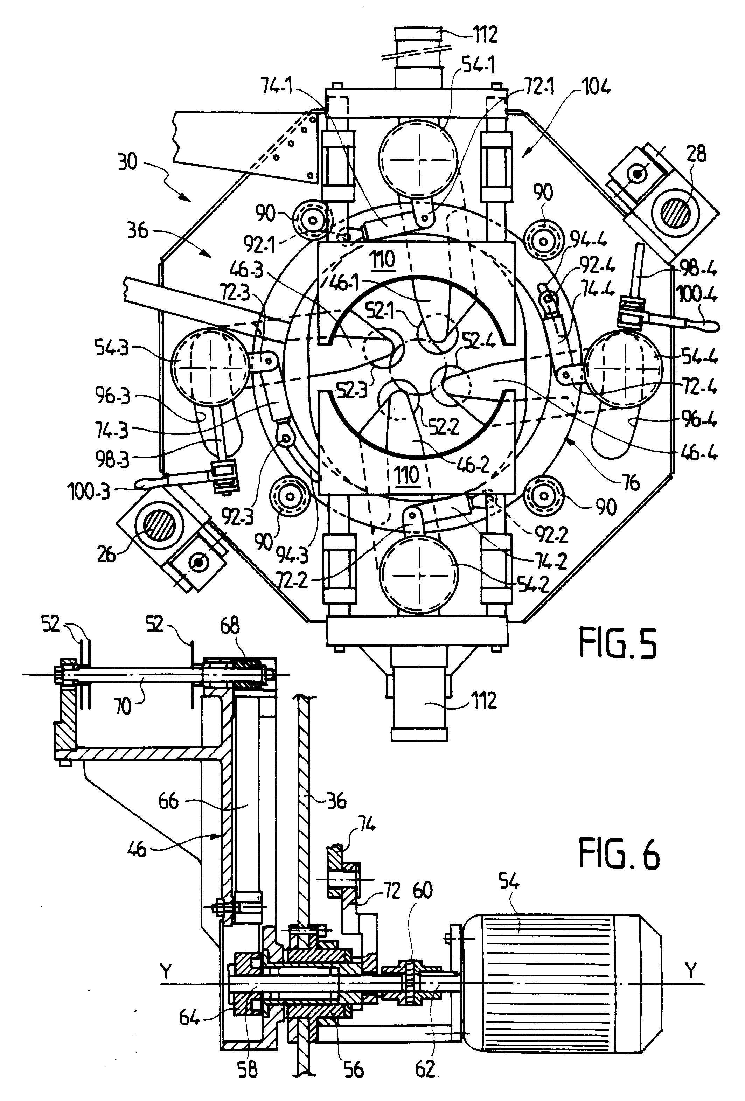

Les bras 46-1 à 46-4 ont une seconde extrémité 50-1 à 50-4 portant un train de fraises 52-1 à 52-4 entraîné en rotation par un moteur 54-1 à 54-4 (figures 4 et 5).

Comme le montre la figure 6, chaque bras 46 est monté à rotation par son extrémité 48 sur la joue 36 autour d'un axe YY parallèle à l'axe XX défini plus haut. La joue 36 porte un moyeu 56 traversé par un arbre 58 s'étendant dans la direction de l'axe YY.

Une première extrémité de l'arbre 58 est reliée à un accouplement universel 60 lui-même calé sur l'arbre 62 d'un moteur 54. Ce moteur est avantageusement un moteur asynchrone à vitesse variable alimenté par un variateur de fréquence.

L'arbre 62 du moteur 54 s'étend également dans la direction de l'axe YY.

Sur la seconde extrémité de l'arbre 58 est calée une poulie 64 sur laquelle s'enroule une courroie d'entraînement 66 qui s'enroule aussi autour d'une poulie 68 calée sur un arbre 70 porté par la seconde extrémité 50 du bras 46. L'arbre 70 s'étend parallèlement à l'arbre 58 et porte une pluralité de disques de fraisage 52 montés amovibles, en sorte que leur nombre, leur écartement mutuel et leurs dimensions puissent être modifiés à volonté en fonction de l'application souhaitée.

On comprendra que le train de fraises 52 de chaque bras 46 est entraîné en rotation, indépendamment des trains de fraises des autres bras, par son propre moteur 54.

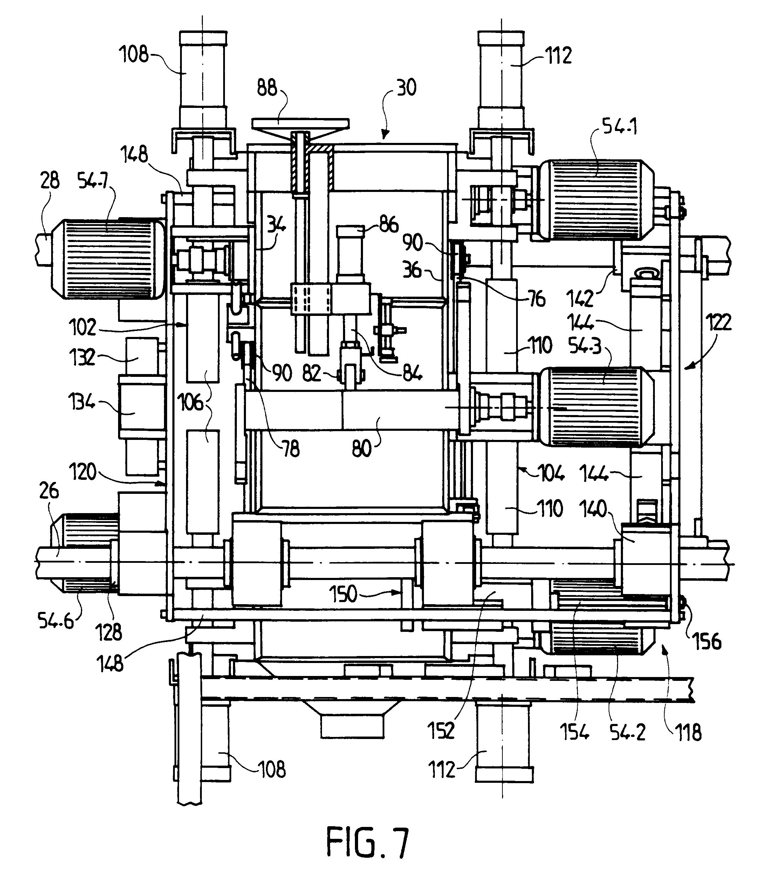

Comme on le voit également sur les figures 4 et 7, l'autre joue 34 de la cage 30 porte aussi un ensemble d'usinage analogue qui comprend quatre bras d'usinage 46-5 à 46-8 ayant des moteurs respectifs 54-5 à 54-8 (représentés en traits interrompus sur la figure 4). Les bras 46-5 à 46-8 sont disposés deux à deux dans des régions diamétralement opposées de la cage mais de façon décalée angulairement par rapport aux bras de la cage 36. Comme le montre la figure 4, les huit moteurs 54-1 à 54-8 portés par la cage 30 sont disposés les uns par rapport aux autres dans des positions à 45° les unes par rapport aux autres.

Les huit bras 46-1 à 46-8 sont propres à être entraînés en synchronisme pour pouvoir pivoter entre deux positions extrêmes : une position de repos dans laquelle les trains de fraises respectifs des bras sont éloignés de la paroi du tube 10 et une position de travail dans laquelle ces trains de fraises sont en contact d'usinage avec la paroi du tube, comme montré aux figures 4 et 5.

Chacun des bras 46 est solidaire en rotation d'un levier 72-1 à 72-4 (figures 5 et 6) sur lequel est articulée une biellette 74-1 à 74-4 elle-même articulée sur une couronne de manoeuvre 76 montée à rotation coaxialement autour de l'axe XX.

L'ensemble d'usinage 42 porté par la joue 34 comporte aussi une couronne 78 (figure 7) et ces deux couronnes sont reliées entre elles par une entretoise 80 sur laquelle s'articule, autour d'un pivot 82, la tige 84 d'un corps de vérin 86 porté par la cage 30 et dont la position peut être réglée par un volant de réglage 88. Lorsque la tige 84 du vérin est déplacée dans le sens de son allongement ou dans le sens de son retrait, les couronnes 76 et 78 sont entraînées simultanément en rotation sur une course limitée, dans un sens ou dans l'autre, ce qui permet de faire pivoter l'ensemble des bras 46 de leur position de repos vers leur position de travail ou inversement.

Dans la position de la figure 7, la tige 84 est en position déployée et les bras 46 sont dans leur position de travail.

Comme on le voit sur la figure 5, la couronne 76 est guidée en rotation par quatre galets à gorge 90 montés fous en rotation sur la joue 36.

Chacune des biellettes 74-1 à 74-4 est articulée sur la couronne 76 autour d'un pivot 92-1 à 92-4.

Dans la forme de réalisation représentée, les pivots 92-1 et 92-2 sont montés fixement sur la couronne 76, tandis que les pivots 92-3 et 92-4 sont montés chacun réglables en position angulaire, par rapport à la couronne 76, grâce à des fentes respectives 94-3 et 94-4 en forme d'arcs de cercle. Ceci permet non seulement de pouvoir découpler les biellettes de la couronne mais aussi de régler leur position d'articulation sur cette couronne.

En effet, les extrémités respectives 48-3 et 48-4 des bras 46-3 et 46-4 peuvent être modifiées en position par rapport à la joue 36. Les moyeux respectifs 56 des bras 46-3 et 46-4 peuvent se déplacer respectivement dans deux fentes 96-3 et 96-4 en forme d'arcs de cercle (figure 5) et la position des moyeux peut être réglée par une vis d'entraînement 98-3 et 98-4 entraînées par un levier à cliquet 100-3 et 100-4.

Les fentes 92-3 et 96-3 autorisent un réglage angulaire du bras correspondant avec un débattement qui peut être de l'ordre de 15 à 20°. Il en est de même pour les fentes 92-4 et 96-4 associées aux bras 46-4.

Bien que cela ne soit pas représenté sur les figures, les bras 46-7 et 46-8 de l'autre ensemble d'usinage peuvent être aussi réglés en position ou être découplés.

La cage comporte en outre deux ensembles de blocage 102, 104 portés respectivement par les joues 34 et 36. L'ensemble 102 comprend deux mâchoires opposées 106 susceptibles d'être déplacées verticalement l'une vers l'autre sous l'action de deux vérins opposés 108 pour immobiliser la cage 30 sur le tube 10 lorsque les deux mâchoires 106 sont rapprochées. L'ensemble de blocage 104 comporte aussi deux mâchoires opposées 110 actionnées respectivement par deux vérins opposés 112 (figures 3, 4 et 5) pour assurer, dans les mêmes conditions, l'immobilisation de la cage 30 lorsque les deux vérins 112 sont actionnés.

Les vérins 108 et 112 sont avantageusement des vérins de type pneumatique alimentés à partir d'un réseau d'air comprimé. Le vérin 86 est le seul vérin hydraulique du dispositif et il est alimenté par une centrale 116 (figure 4).

On comprendra que le vérin 86 qui commande le pivotement simultané des bras 46 est actionné uniquement lorsque les ensembles de blocage 102 et 104 assurent l'immobilisation de la cage par rapport aux tubes 10.

La cage 30 comporte en outre des moyens de blocage (non représentés) qui permettent d'immobiliser la cage en translation le long des barres de guidage 26 et 28 pour l'immobilisaser par rapport au bâti 18.

Sur les barres de guidage 26 et 28 est également monté mobile en translation un équipage 118 (figures 3 et 7).

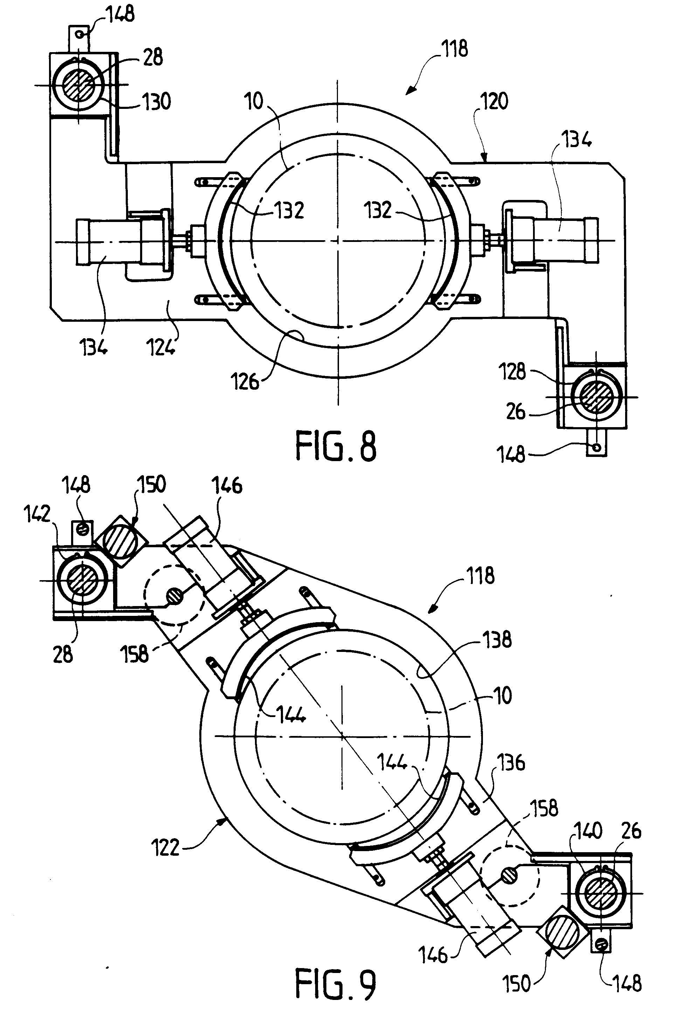

L'équipage 118 comprend deux brides d'extrémité 120 et 122 qui sont montrées respectivement sur les figures 8 et 9. La bride 120 comprend une traverse horizontale 124 comportant un trou central circulaire 126 centré sur l'axe XX et permettant le passage du tube 10. La traverse 124 porte en outre deux bagues 128 et 130 coulissant respectivement sur les barres de guidage 26 et 28. La bride 120 porte des moyens de blocage comprenant deux mâchoires opposées 132 actionnées chacune par un vérin pneumatique 134 et propres à agir contre deux régions diamétralement opposées, dans la direction horizontale, du tube 10, lorsque les tiges respectives des vérins 134 sont déployées.

La bride 122 représentée à la figure 9 comprend une traverse 136 comportant un trou circulaire 138 centré sur l'axe XX pour permettre le passage du tube 10. La traverse 136 porte deux bagues 140 et 142 coulissant respectivement sur les barres de guidage 26 et 28. La bride 122 porte deux mâchoires 144 diamétralement opposées dans une direction inclinée par rapport à l'horizontale et actionnées respectivement par deux vérins pneumatiques 146. Lorsque les tiges respectives des deux vérins 146 sont déployées, les deux mâchoires 144 se rapprochent et viennent enserrer la paroi du tube 10.

Les brides 120 et 122 sont reliées entre elles par deux tiges longitudinales 148 (figures 8 et 9) formant entretoises. Comme on le voit plus particulièrement sur la figure 3, les brides 120 et 122 encadrent la cage 30, si bien qu'il existe un mouvement de translation relatif entre la cage 30 et l'équipage mobile 118.

Le dispositif de l'invention comprend en outre deux vérins pneumatiques 150 (figures 3 et 9) possédant un corps 152 fixé sur la cage 30 et une tige 154 dont l'extrémité libre est fixée en 156 sur la bride 122 de l'équipage mobile (figure 3).

La course de déplacement des deux vérins 150 est réglable grâce à deux butées 158 (figure 9) situées à proximité des vérins. On peut ainsi régler la course de déplacement relative de la cage 30 et de l'équipage mobile 118 pour qu'elles correspondent à un pas déterminé entre deux opérations d'usinage successives. Ceci permet de placer précisément la cage après chaque opération ou cycle de fonctionnement en éliminant le cumul des erreurs de mesure de longueur.

Comme on peut le voir sur les figures 3 et 4, le dispositif de l'invention comprend en outre une armoire de commande 160 agissant sur les différents organes du dispositif.

Le dispositif décrit précédemment peut être utilisé, soit en ligne d'extrusion, soit hors ligne d'extrusion.

Dans le cas de l'utilisation en ligne, le tube 10 défile en continu au travers du bâti 18 et notamment de la cage 30. Les moyens de commande délivrent un signal de départ lorsqu'un tube est détecté à l'entrée du dispositif, ce qui assure la fermeture des moyens de blocage (mâchoires 106 et 110) de la cage 30. La cage est ensuite détectée par des moyens appropriés et l'équipage mobile 118 est déplacé du côté de l'extrudeuse, c'est-à-dire en sens opposé à la flèche F (figure 3), par déploiement des vérins 150.

Les moyens de blocage (mâchoires 130 et 144) de l'équipage mobile qui étaient jusqu'à présent éloignées les unes des autres sont rapprochées pour assurer l'immobilisation de l'équipage mobile par rapport au tube 10 qui se déplace en continu.

Ensuite, les moyens de blocage de la cage 30 sont désactivés, tandis que les deux vérins pneumatiques 150 sont rétractés pour assurer un déplacement relatif de la cage par rapport à l'équipage mobile en sens opposé à la flèche F, jusqu'à ce que la cage vienne coopérer avec les butées 158 de la bride 122.

A ce moment-là, on actionne les moyens de blocage (mâchoires 102 et 104) de la cage 30 pour immobiliser la cage sur le tube qui avance en continu. La cage se déplace alors simultanément avec le tube 10, dans le sens de la flèche F, sur une course limitée correspondant au pas défini précédemment, les moyens de blocage de l'équipage mobile 118 étant désactivés. Pendant ce déplacement, le tube est usiné par l'action simultanée des trains de fraises 52 sous l'action du vérin 86.

Après usinage des fentes, les moyens de blocage de la cage 30 sont désactivés et on recommence un cycle de fonctionnement comme précédemment.

Dans le cas d'un fonctionnement hors ligne, la cage 30 reste en permanence immobilisée sur les barres de guidage 26 et 28 du bâti 18. C'est alors l'équipage mobile 118 qui permet de faire avancer pas à pas le tube 10 à usiner.

Les moyens de blocage de l'équipage mobile et les moyens de blocage de la cage étant désactivés, les vérins 150 sont déployés pour déplacer l'équipage mobile vers l'avant de la machine (en sens opposé à la flèche F). Les moyens de blocage de l'équipage mobile sont alors actionnés pour immobiliser l'équipage sur le tube. Les vérins 150 sont alors rétractés, ce qui permet de faire avancer le tube 10 d'un pas dans la direction de la flèche F. Les moyens de blocage de la cage sont alors actionnés pour immobiliser le tube dans la cage en vue de l'opération d'usinage qui se déroule de la même façon que précédemment.

On recommence ensuite les opérations précédentes pour faire une succession d'opérations d'usinage pas à pas.

Bien entendu, l'invention n'est pas limitée aux formes de réalisation décrites précédemment à titre d'exemples et s'étend à d'autres variantes.

Ainsi, il est possible d'utiliser un seul ensemble d'usinage au lieu de deux ensembles d'usinage comme décrit précédemment.

Quelles que soient les applications, le nombre des bras pivotants portés par le ou chaque ensemble d'usinage peut être différent de quatre. Dans la pratique, il semble toutefois que le nombre de quatre soit un nombre optimal, spécialement dans le cas où on utilise deux ensembles d'usinage, ce qui permet d'effectuer au maximum huit usinages simultanés.

Le dispositif de l'invention permet de réaliser des fentes transversalement sur la paroi d'un tube dont le diamètre peut aller jusqu'à environ 500 mm.

Bien entendu, les mâchoires de l'appareil devront être changées en fonction du diamètre du tube à usiner.

A titre d'exemple, pour l'usinage de tubes ayant un diamètre inférieur ou égal à 160 mm, on peut utiliser une machine comportant un seul ensemble d'usinage et quatre bras d'usinage. Pour les tubes de diamètre supérieur, il est plus intéressant d'utiliser une machine qui comporte deux ensembles d'usinage comportant en tout huit bras d'usinage.

L'invention s'applique à la réalisation de fentes sur des tubes qui peuvent être extrudés en matière plastique ou éventuellement en d'autres matériaux tels que des alliages métalliques.

## Revendications

**1.-** Dispositif pour usiner des fentes au travers d'une paroi d'un tube, caractérisé en ce qu'il comprend :
- une cage (30) portée par un bâti (18) et comportant un passage (32) autorisant un déplacement en translation du tube (10) dans une direction axiale déterminée (XX);
- des moyens de blocage (102,104) propres à immobiliser la cage (30) par rapport au tube (10) dans une position mutuelle d'usinage;
- des moyens d'avance pas à pas (118,150) propres à imposer des déplacements relatifs entre la cage (30) et le tube (10) et les amener dans des positions mutuelles d'usinage successives;
- au moins un ensemble d'usinage (42,44) porté par la cage (30) et comportant une multiplicité de bras pivotants (46) possédant chacun une première extrémité (48) montée à pivotement sur la cage (30) autour d'un axe (YY) s'étendant parallèlement et à distance de la direction axiale (XX) et une seconde extrémité (50) portant un train de fraises d'usinage (52) entraîné en rotation par un moteur (54), ainsi que des moyens de commande (76,78,86) pour faire pivoter chaque bras (46) entre une position de repos dans laquelle le train de fraises (52) est éloigné de la paroi du tube et une position de travail dans laquelle le train de fraises est en contact d'usinage avec la paroi du tube.

**2.-** Dispositif selon la revendication 1, caractérisé en ce que la cage (30) est montée mobile en translation sur le bâti (18) dans la direction axiale (XX) de déplacement du tube et en ce que les moyens d'avance pas à pas comprennent un équipage (118) monté mobile en translation sur le bâti (18) dans la même direction axiale (XX) et muni de moyens de blocage (132,144) pour immobiliser cet équipage mobile par rapport au tube (10), ainsi que des vérins de commande (150) pour changer la position mutuelle de la cage et de l'équipage mobile lorsque les moyens de blocage (102,104) de la cage ou les moyens de blocage (132,144) de l'équipage mobile sont actionnés.

**3.-** Dispositif selon la revendication 2, caractérisé en ce que les moyens de blocage de la cage (30) et les moyens de blocage de l'équipage mobile (118) comprennent chacun deux paires de mâchoires opposées (106 et 110;132 et 144) propres à enserrer des régions diamétralement opposées de la paroi du tube sous l'action d'organes d'actionnement (108 et 112; 134 et 146).

**4.-** Dispositif selon l'une des revendications 2 et 3, caractérisé en ce qu'il comprend des moyens de blocage de la cage (30) par rapport au bâti (18).

**5.-** Dispositif selon l'une des revendications 1 à 4, caractérisé en ce que la cage (30) porte un seul ensemble d'usinage.

**6.-** Dispositif selon l'une des revendications 1 à 4, caractérisé en ce que la cage (30) porte deux ensembles d'usinage (42,44).

**7.-** Dispositif selon l'une des revendications 1 à 6, caractérisé en ce que le ou chaque ensemble d'usinage (42,44) comporte quatre bras pivotants (46) disposés deux à deux dans des régions diamétralement opposées de la cage par rapport à la direction axiale (XX) de déplacement du tube.

**8.-** Dispositif selon l'une des revendications 1 à 7, caractérisé en ce que chaque bras pivotant (46) porte un moteur (54) dont l'arbre (62) s'étend coaxialement à l'axe de pivotement (YY) du bras (46) et porte une poulie (64) sur laquelle s'enroule une courroie d'entraînement (66) du train de fraises d'usinage (52).

**9.-** Dispositif selon l'une des revendications 1 à 8, caractérisé en ce que le moteur (54) est un moteur asynchrone à vitesse variable.

**10.-** Dispositif selon la revendication 8, caractérisé en ce que le ou chaque ensemble d'usinage (42,44) comprend une couronne de manoeuvre (78,76) propre à être entraînée en rotation, coaxialement par rapport à la direction de déplacement du tube, avec un débattement angulaire limité par rapport à l'ensemble d'usinage, et en ce que chacun des bras (46) est relié par une bride articulée (74) à la couronne d'entraînement, ce qui permet un pivotement synchronisé des bras lorsque la couronne de manoeuvre est entraînée en rotation.

**11.-** Dispositif selon la revendication 10, caractérisé en ce que l'un au moins (46-3, 46-4) des bras d'un ensemble d'usinage peut être désaccouplé de la couronne de manoeuvre (76,78).

**12.-** Dispositif selon l'une des revendications 10 et 11, caractérisé en ce qu'il comprend des moyens (92-3, 94-3, 96-3, 100-3) pour régler la position de l'un au moins des bras pivotants sur l'ensemble d'usinage.

**13.-** Dispositif selon l'une des revendications 1 à 12, caractérisé en ce que le train de fraises (52) de chaque bras comprend une pluralité de disques de fraisage montés amovibles sur un arbre commun (70), en sorte que le nombre, l'écartement mutuel et les dimensions des disques peuvent être modifiés à volonté.
